# EUROPÄISCHE PATENTSCHRIFT

(11) **EP 1 884 696 B1**
(45) Veröffentlichungstag und Bekanntmachung des Hinweises auf die Patenterteilung: **04.02.2009**
(21) Anmeldenummer: 07005865.6
(22) Anmeldetag: 22.03.2007
(51) Int. Cl.: F16K 31/00

(54) **Thermostatventil**
Thermostatic valve
Soupape thermostatique

(30) Priorität: 28.07.2006 DE 102006034982
(43) Veröffentlichungstag der Anmeldung: 06.02.2008
(73) Patentinhaber: Gustav Wahler GmbH u. Co.KG, 73730 Esslingen (DE)
(72) Erfinder: Gebauer, Markus, 70563 Stuttgart (DE)
(74) Vertreter: Kratzsch, Volkhard

(56) Entgegenhaltungen:
- FR-A- 2 656 060
- GB-A- 413 906
- GB-A- 831 759
- JP-A- 11 173 147

## Beschreibung

Die Erfindung bezieht sich auf ein Thermostatventil mit den Merkmalen im Oberbegriff des Anspruchs 1.

Bei bekannten Thermostatventilen dieser Art erfolgt die Schließbewegung und Öffnungsbewegung des Arbeitselements mitsamt Ventilglied koaxial zur Längsausrichtung, z. B. zur Längsmittelachse, des Ventilgehäuses, so dass das Ventilglied im Schließzustand und auch im Öffnungszustand innerhalb einer Radialebene verläuft, die rechtwinklig zur Längsmittelachse des Ventilgehäuses gerichtet ist.

Aus GB 831759 A ist ein Thermostatventil bekannt, dessen thermostatisches Arbeitselement ein tellerförmiges Ventilglied trägt, dem in einem Ventilgehäuse ein Ventilsitz zugeordnet ist und das vom thermostatischen Arbeitselement betätigbar ist. Das Arbeitselement weist in axialemAbstand vom Ventilglied einen etwa zylindrischen Gehäuseteil auf, der eine von einem zylindrischen Kragen umfasste Öffnung des Ventilgehäuses durchsetzt. Zwischen diesem Gehäuseteil und der Öffnung ist durch entsprechende Durchmesserbemessung ein Spiel vorhanden. In axialem Abstand von diesem die Öffnung des Kragens des Ventilgehäuses mit Spiel durchsetzendenGehäuseteil ragt aus dem Ende des Gehäuses des Arbeitselements ein aus dem Gehäuse ausstoßbarer Kolben hervor, der axial an einem mit dem Ventilgehäuse verbundenen Halter abgestützt ist. Der Halter weist eine Endwand auf mit einer zentralen Öffnung darin, die vom im Durchmesser reduzierten freien Ende des Kolbens mit radialem Spiel durchsetzt ist. Aufgrund dieses radialen Spiels am Ende des Kolbens und ferner zwischen dem Gehäuseteil des Arbeitselements und der Öffnung des Kragens des Ventilgehäuses sind eine geringe Querbewegung und ein leichtes Kippen des Arbeitselements mitsamt dem Ventilglied in Bezug auf die Längsmittelachse des Ventilgehäuses möglich. Diese leichte Kippmöglichkeit soll im Schließzustand dann, wenn Schmutzpartikel zwischen den gehäuseseitigen Ventilsitz und der Schließfläche des Ventilgliedes gelangen, eventuelle Leckagen reduzieren, da das Ventilglied dann nicht, wie sonst, entlang dem gesamten Umfang der Ventilfläche offen steht. Ausgehend vom geschlossenen Zustand soll das Öffnen des Ventilgliedes weniger abrupt unter Reduzierung des Ventilflatterns erfolgen und dadurch die Temperaturregelung verbessert werden. Von Nachteil ist, dass das geringförmige Kippen des Arbeitselements mit Ventilglied unkontrolliert und nicht gezielt in reproduzierbarer Weise geschieht und deswegen das Regelverhalten des Thermostatventils mit Öffnen und Schließen unkontrolliert geschieht.

Aus FR 2656060 A ist ein Thermostatventil bekannt, bei dem das Ventilglied aus einer Schieberhülse gebildet ist, die von einem im Inneren der Schieberhülse abgestützten thermostatischen Arbeitselement axial verstellt wird. Bei einem solchen Thermostatventil wurde als nachteilig festgestellt, dass bei der Betätigung das Arbeitselement mitsamt der Schieberhülse sich in unerwünschter Weise in Bezug auf die Längsmittelachse des Gehäuses selbsttätig schräg stellen kann, so dass die Steuerung der Ventilflächen, die der Ventilhülse zugeordnet sind, beeinträchtigt wird oder das Ventil nach gewisser Zeit sogar blockiert. Einer derartigen unerwünschten Schrägstellung wird daher in der Weise begegnet, dass die beiden Endflächen der Schieberhülse kugelförmig konzentrisch ausgebildet sind.

Der Erfindung liegt die Aufgabe zugrunde, ein Thermostatventil der eingangs genannten Art zu schaffen, bei dem im geöffneten Zustand eine verbesserte Anströmung und Vergrößerung des Durchflussquerschnitts erreicht wird.

Die Aufgabe ist bei einem Thermostatventil der eingangs genannten Art gemäß der Erfindung durch die Merkmale im Anspruch 1 gelöst. Hierdurch wird erreicht, dass durch die Betätigungseinrichtung bei Betätigung des Arbeitselements mit dem Ventilglied zur Herbeiführung der Öffnungsstellung zugleich deren Schrägstellung in Bezug auf die Längsausrichtung des Ventilgehäuses und derart geschieht, dass auf einer Seite des Arbeitselements und des Ventilgliedes der Durchflussquerschnitt vergrößert ist. Dies führt zu einer besseren Anströmung im Bereich des Ventilgliedes und zu einer Durchflussoptimierung. Druckverluste werden dadurch verringert. Diese Vorteile werden dabei mit einfachen Mitteln erzielt. Bei der gegensinnigen Schließbetätigung wird mittels der Betätigungseinrichtung das Arbeitselement zusammen mit dem Ventilglied in Bezug auf die Längsausrichtung des Ventilgehäuses zugleich aus der Schräglage zurück in eine koaxiale Ausgangsstellung verstellt. Das Thermostatventil dieser Art ist dabei klein, kompakt und kostengünstig, wobei es nur einen geringen Bauraum erfordert.

Weitere vorteilhafte Erfindungsmerkmale und Ausgestaltungen ergeben sich aus den Unteransprüchen.

Weitere Einzelheiten und Vorteile der Erfindung ergeben sich aus der nachfolgenden Beschreibung.

Der vollständige Wortlaut der Ansprüche ist vorstehend zur Vermeidung unnötiger Wiederholungen nicht wiedergegeben, sondern statt dessen lediglich durch Hinweis auf die Ansprüche darauf Bezug genommen, wodurch jedoch alle diese Anspruchsmerkmale als an dieser Stelle ausdrücklich und erfindungswesentlich offenbart zu gelten haben.

Die Erfindung ist nachfolgend anhand eines in den Zeichnungen gezeigten Ausführungsbeispieles näher erläutert. Es zeigen:
- Fig. 1: einen schematischen senkrechten Schnitt eines Thermostatventils in der geschlossenen Ausgangsstellung,
- Fig. 2: einen schematischen Schnitt entsprechend Fig. 1, wobei sich das Thermostatventil in einer geöffneten und schrägen Stellung befindet,
- Fig. 3: eine schematische perspektivische Ansicht des Thermostatventils entsprechend Fig. 2.

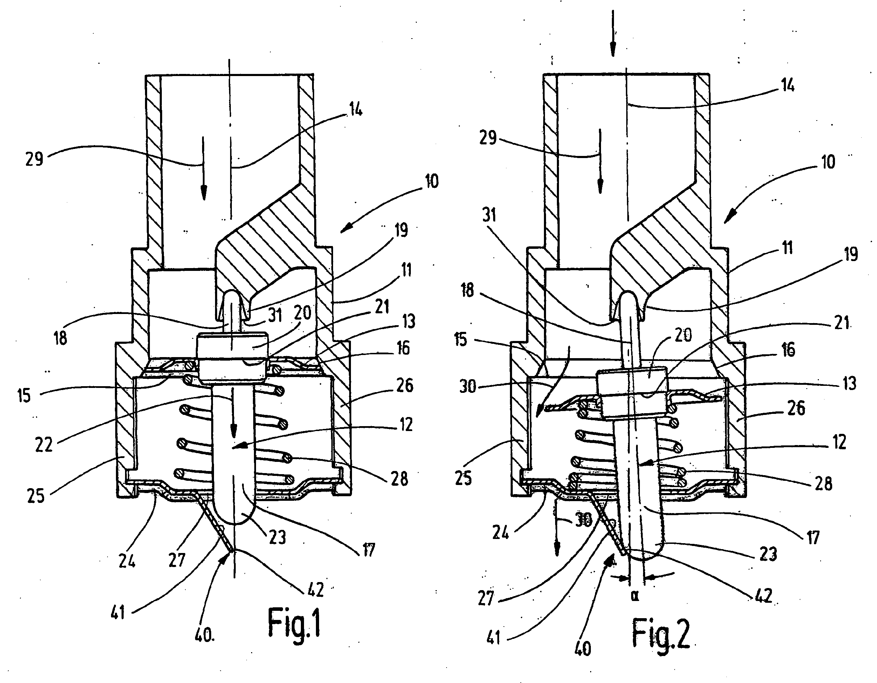

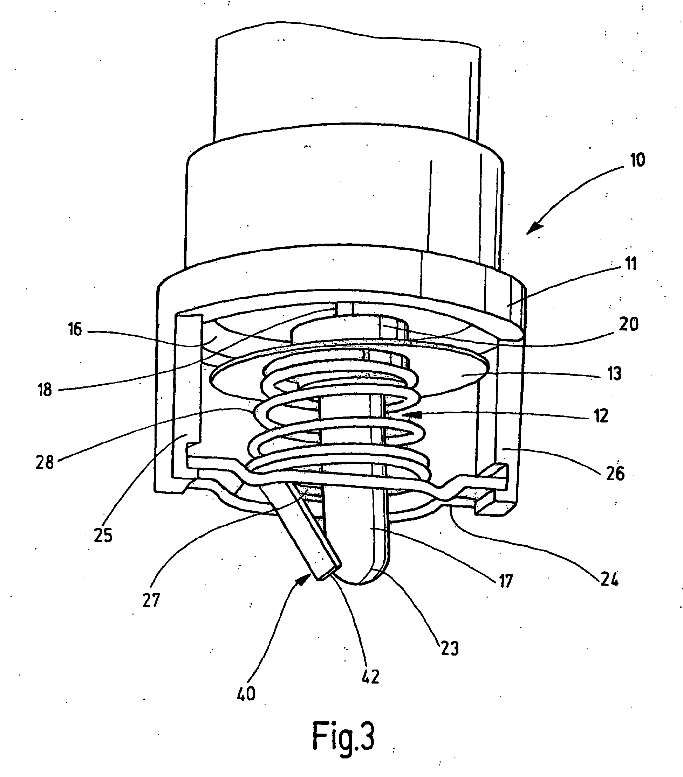

In den Zeichnungen ist vereinfacht ein Thermostatventil 10 gezeigt, das in einem z. B. etwa rohrförmigen Ventilgehäuse 11 ein thermostatisches Arbeitselement 12 und ein Ventilglied 13 enthält. Im Ventilgehäuse 11 ist innerhalb einer zur Längsausrichtung, z. B. Längsmittelachse 14, radial verlaufenden Ebene 15 ein Ventilsitz 16 ausgebildet, der dem Ventilglied 13 zugeordnet ist und von diesem beherrscht wird, d. h. in Schließstellung gemäß Fig. 1 geschlossen und in der Öffnungsstellung gemäß Fig. 2 und 3 geöffnet ist. Das Ventilglied 13 ist vom Arbeitselement 12 betätigbar.

Das thermostatische Arbeitselement 12 enthält innerhalb seines rotationssymmetrischen, überwiegend zylindrischen Gehäuses 17 einen sich bei Temperaturausdehnung ausdehnenden Dehnstoff, z. B. Wachs, in den ein Stößel 18 eintaucht, der unter Abdichtung aus dem Gehäuse 17 herausragt. Der Stößel 18 ist mit seinem freien Ende an einem Abstützteil 19 des Ventilgehäuses 11 axial abgestützt. Das Ventilglied 13 ist insbesondere als Ventilteller ausgebildet und z. B. mit Presssitz auf dem Gehäuse 17 des Arbeitselements 12 gehalten. Das Gehäuse 17 weist an dem Endbereich, aus dem der Stößel 18 herausragt, einen verdickten Kopf 20 mit ringförmiger Schulter 21 auf, an der das Ventilglied 13 derart anliegt, dass es vom Gehäuse 17 bei dessen Relativbewegung relativ zum abgestützen Stößel 18 in Öffnungsrichtung gemäß Pfeil 22 mitgenommen wird.

Im Gehäuseendbereich 23, der dem Kopf 20 gegenüberliegt, ist ein Brückenglied 24 mit beiden Enden an herabstrebenden Armen 25, 26 des Ventilgehäuses 11 z. B. lösbar gehalten. Das Brückenglied 24 enthält einen zur Längsmittelachse 14 koaxialen zentralen Durchlass 27 für den Durchlass des Gehäuses 17 des Arbeitselements 12. Das Brückenglied 24 dient als Abstützung für ein Rückstellmittel 28, z. B. in Form einer Feder, das sich mit dem zugeordneten Ende axial am Brückenglied 24 abstützt. Mit dem gegenüberliegenden Ende ist das Rückstellmittel 28 am Ventilglied 13 oder, wie nicht gezeigt ist, am Gehäuse 17 abgestützt.

Ein mittels des Thermostatventils 10 zu steuerndes Medium, z. B. Kühlmittel eines Kühlmittelkreislaufs einer Brennkraftmaschine, wird oberhalb des thermostatischen Arbeitselements 12 in Richtung des Pfeiles 29 zugeführt und strömt bei geöffnetem Thermostatventil gemäß Fig. 2 in Pfeilrichtung 30 nach unten ab. Auch eine Strömung gegensinnig zu den Pfeilen 29, 30 ist möglich.

Das thermostatische Arbeitselement 12 ist zusammen mit dem Ventilglied 13, ausgehend von der geschlossenen Stellung gemäß Fig. 1 bei der Öffnungsbetätigung in die Öffnungsstellung gemäß Fig. 2 in Bezug auf die Längsausrichtung, z. B. die Längsmittelachse 14, des Ventilgehäuses 11 zusätzlich zur Öffnungsbetätigung zugleich in eine Schrägstellung schräg stellbar unter Vergrößerung des Durchlassquerschnittes auf der in Fig. 2 linken Seite des Arbeitselements 12 und des Ventilgliedes 13. Bei der gegensinnigen Schließbetätigung ist das Arbeitselement 12 zusammen mit dem Ventilglied 13 in Bezug auf die Längsausrichtung, z. B. Längsmittelachse 14, des Ventilgehäuses 11 zugleich aus der Schrägstellung zurück in eine koaxiale Ausgangsstellung gemäß Fig. 1 verstellbar. Der Schrägungswinkel ist in Fig. 2 mit α bezeichnet. Man erkennt, dass in dieser Öffnungs- und zugleich Schrägstellung das Arbeitselement 12 zusammen mit dem Ventilglied 13 nicht mehr koaxial in Bezug auf die Längsmittelachse 14 verläuft, sondern statt dessen in Bezug auf diese unter einem Winkel α schräg ausgerichtet ist. Die Anströmung des Thermostatventils 10 erfolgt in Fig. 2 gemäß Pfeil 29 von oben, so dass also die Anströmung des Ventilgliedes 13 überwiegend im Bereich der Seite geschieht, die links der Längsmittelachse 14 liegt. Diese Schrägstellung, die durch Kippen des Arbeitselements 12 beim Öffnen erreicht wird, führt zu einer besseren Anströmung und Vergrößerung des Durchlassquerschnittes. Druckverluste werden dadurch reduziert. Auch wenn in Fig. 2 hinsichtlich des Ventilgliedes 13 nur eine relativ kleine Schrägausrichtung in Bezug auf die radiale Ebene 15, innerhalb der der Ventilsitz 16 verläuft, gezeigt ist, versteht es sich gleichwohl, dass das als Ventilteller ausgebildete Ventilglied 13 mit der letzteres enthaltenden Ebene in der Schrägstellung in Bezug auf die Ebene 15 unter einem deutlich größeren Schrägungswinkel von z. B. bis etwa 45 ° oder größer verlaufen kann.

Zur Herbeiführung der Schrägstellung und/oder Rückstellung des Arbeitselements 12 ist eine Betätigungseinrichtung vorgesehen. Diese kann vielfältig gestaltet sein, z. B. eine auf das Arbeitselement 12 arbeitende Stelleinrichtung aufweisen, z. B. mit mindestens einem Stellhebel od. dgl. Stellglied. Auch kann die Betätigungseinrichtung eine Antriebseinrichtung aufweisen.

Beim gezeigten Ausführungsbeispiel weist die Betätigungseinrichtung ein Leitelement 40 zur Schrägführung und Schrägstellung des thermostatischen Arbeitselements 12 bei der Bewegung in die Öffnungsstellung gemäß Fig. 2, 3 und zurück in die Ausgangsstellung gemäß Fig. 1 auf. Das Leitelement 40 weist eine in Bezug auf die Längsausrichtung, z. B. Längsmittelachse 14, des Ventilgehäuses 11 schräg gerichtete Schrägfläche 41 auf. Bei der Öffnungsbetätigung des Arbeitselements 12 mit Ventilglied 13 ist das Arbeitselement 12 mit einem Bereich, z. B. dem in der Zeichnung bezeichneten unteren Gehäuseendbereich 23, in Öffnungsrichtung unter gleichzeitiger Schrägstellung an der Schrägfläche 41 entlang geführt. Beim gezeigten Ausführungsbeispiel gleitet das Arbeitselement 12 unmittelbar entlang der Schrägfläche 41. Es können stattdessen zur Führung auch Rollkörper, Wälzkörper, Gleitkörper od. dgl. vorgesehen sein, mittels denen die Schrägführung geschieht, wobei diese Körper am Arbeitselement 12 oder an der Schrägfläche 41 angeordnet sein können.

Das Leitelement 40 ist in einfacher Weise aus einem Lappen 42 gebildet, der in Bezug auf die Längsausrichtung, z. B. Längsmittelachse 14, des Ventilgehäuses 11 schräg verläuft und dem Gehäuseendbereich 23 des Arbeitselements 12, der dem Ventilglied 13 abgewandt ist, zugeordnet ist. In einfacher Weise ist das Leitelement 40 Teil, z. B. einstückiger Bestandteil, des Brückengliedes 24, aus dem es ausgeklinkt sein kann. Das Leitelement 40 ist vom Brückenglied 24 ausgehend zu der Seite, die dem Ventilglied 13 abgewandt ist, d. h. in Fig. 1 und 2 nach unten, schräg nach unten und zur Längsmittelachse 14 des Ventilgehäuses 11 hin gerichtet. Dabei ist der zentrale Durchlass 27 des Brückengliedes 24 größer bemessen als das Quermaß, z. B. der Durchmesser, des Arbeitselements 12, derart, dass das Arbeitselement 12 im Durchlass 27 in entsprechende Schräglage bewegbar ist. Aus der beschriebenen Anordnung ergibt sich, dass das thermostatische Arbeitselement 12 zusammen mit dem Ventilglied 13 bei der Verschiebung relativ zum Stößel 18 in die Öffnungsstellung zugleich in die Schrägstellung gemäß Fig. 2 überführt wird und dabei das Ventilglied 13 vom Ventilsitz 16 abgehoben und in eine entsprechende Schräglage gebracht wird.

Der Stößel 18 ist mit seinem freien Ende zumindest in Grenzen schwenkbeweglich am Abstützteil 19 des Ventilgehäuses 11 gehalten. Das Abstützteil 19 enthält zu dieser Abstützung eine sich zum thermostatischen Arbeitselement 12 hin etwa umgekehrt kegelstumpfförmig erweiternde Aufnahme 31 für den Stößel 18.

Die erläuterte Gestaltung des Thermostatventils 10 macht es möglich, dass bei dessen Bewegung in die Öffnungsstellung selbsttätig ein Abkippen des Arbeitselements 12 zusammen mit dem Ventilglied 13 erfolgt und dadurch auf der Anströmseite die Durchflussöffnung zwischen dem Ventilsitz 16 und dem Ventilglied 13 vergrößert wird. Das Kippen des Arbeitselements 12 und des Ventilgliedes 13 führt zu einer besseren Anströmung und zu einer Vergrößerung des Durchflussquerschnitts. Dies wird mit einfachen Mitteln durch das Leitelement 40 erreicht, gegen dessen Schrägfläche 41 bei der Offnungsbetätigung das Arbeitselement 12, insbesondere dessen Gehäuseendbereich 23, angedrückt wird, wobei ein Entlanggleiten entlang der Schrägfläche 41 geschieht. Der Schrägungswinkel für die Schrägstellung ist dabei in einfacher Weise durch die Wahl der Schrägung der Schrägfläche 41 bestimmbar, insbesondere durch den Winkel, der zwischen dem Lappen 42 und z. B. der Längsmittelachse 14 eingeschlossen wird. Je größer dieser Winkel gewählt wird, umso größer ist der Winkel α. Die Einstellung ist z. B. durch einfaches Abbiegen des Lappens 42 wählbar. In der in Fig. 1 gezeigten Schließstellung des Thermostatventils 10 kann der Berührungskontakt zwischen dem Arbeitselement 12, insbesondere Gehäuseendbereich 23, und dem Leitelement 40 aufgehoben sein, so dass eine garantierte Schließstellung gewährleistet ist, bei der das Ventilglied 13 am Ventilsitz 16 dichtend anliegt.

## Patentansprüche

1. Thermostatventil, mit einem thermostatischen Arbeitselement (12) und einem Ventilglied (13), dem in einem Ventilgehäuse (11) ein Ventilsitz (16) zugeordnet ist und das vom thermostatischen Arbeitselement (12) betätigbar ist,
**gekennzeichnet durch**
eine Betätigungseinrichtung zur Schrägstellung und Rückstellung des Arbeitselements (12), **durch** die das thermostatische Arbeitselement (12) zusammen mit dem Ventilglied (13) bei der Öffnungsbetätigung in Bezug auf die Längsausrichtung, z. B. die Längsmittelachse (14), des Ventilgehäuses (11) zugleich in eine Schrägstellung schräg stellbar ist unter Vergrößerung des Durchflussquerschnitts auf einer Seite des Arbeitselements (12) und des Ventilgliedes (13) und bei der Schließbetätigung in Bezug auf die Längsausrichtung, z. B. die Längsmittelachse (14), des Ventilgehäuses (11) zugleich aus der Schrägstellung zurück in eine koaxiale Ausgangsstellung verstellbar ist.

2. Thermostatventil nach Anspruch 1,
**dadurch gekennzeichnet,**
**dass** die Betätigungseinrichtung eine auf das Arbeitselement (12) arbeitende Stelleinrichtung aufweist.

3. Thermostatventil nach Anspruch 2,
**dadurch gekennzeichnet,**
**dass** die Stelleinrichtung mindestens einen Stellhebel od. dgl. Stellglied aufweist.

4. Thermostatventil nach Anspruch 1 bis 3,
**dadurch gekennzeichnet,**
**dass** die Betätigungseinrichtung eine Antriebseinrichtung aufweist.

5. Thermostatventil nach Anspruch 1,
**dadurch gekennzeichnet,**
**dass** die Betätigungseinrichtung ein Leitelement (40) zur Schrägführung des thermostatischen Arbeitselements (12) bei der Bewegung in die Schrägstellung und zurück in die Ausgangsstellung aufweist.

6. Thermostatventil nach Anspruch 5,
**dadurch gekennzeichnet,**
**dass** das Leitelement (40) eine in Bezug auf die Längsausrichtung, z. B. die Längsmittelachse (14), des Ventilgehäuses (11) schräg gerichtete Schrägfläche (41) aufweist, an der das thermostatische Arbeitselement (12) bei der Öffnungsbetätigung mit einem Bereich (23), z. B. einem Gehäuseendbereich, in Öffnungsrichtung unter gleichzeitiger Schrägstellung entlang geführt ist, z. B. mittels Rollkörpern, Wälzkörpern, Gleitkörpern od. dgl., insbesondere unmittelbar entlanggleitet.

7. Thermostatventil nach Anspruch 5 oder 6,
**dadurch gekennzeichnet,**
**dass** das Leitelement (40) aus einem Lappen (42) gebildet ist, der in Bezug auf die Längsausrichtung, z. B. die Längsmittelachse (14), des Ventilgehäuses (11) schräg verläuft und dem Gehäuseendbereich (23) des thermostatischen Arbeitselements (12), der dem Ventilglied (13) abgewandt ist, zugeordnet ist.

8. Thermostatventil nach einem der Ansprüche 5 bis 7,
**dadurch gekennzeichnet,**
**dass** das Leitelement (40) Teil, z. B. einstückiger Bestandteil, eines beidendig am Ventilgehäuse (11), z. B. an herabstrebenden Armen (25, 26) dieses, gehaltenen Brückengliedes (24) ist, das einen zentralen Durchlass (27) für den Durchgang des Gehäuses (17) des thermostatischen Arbeitselements (12) enthält und als Abstützung für ein am Arbeitselement (12) und/oder am Ventilglied (13) angreifendes Rückstellmittel (28), z. B. eine Rückstellfeder, dient.

9. Thermostatventil nach Anspruch 8,
**dadurch gekennzeichnet,**
**dass** das Leitelement (40) vom Brückenglied (24) ausgehend zu einer Seite, die dem Ventilglied (13) abgewandt ist, schräg nach unten und zur Längsmittelachse (14) des Ventilgehäuses (11) hin gerichtet ist.

10. Thermostatventil nach Anspruch 8 oder 9,
**dadurch gekennzeichnet,**
**dass** der zentrale Durchlass (27) des Brückengliedes (24) größer als das Quermaß, z. B. der Durchmesser, des Arbeitselements (12) bemessen ist, derart, dass das Arbeitselement (12) im Durchlass (27) in Schräglage bewegbar ist.

11. Thermostatventil nach einem der Ansprüche 1 bis 10,
**dadurch gekennzeichnet,**
**dass** das thermostatische Arbeitselement (12) innerhalb seines Gehäuses (17) einen sich bei Temperaturerhöhung ausgehenden Dehnstoff, z. B. Wachs, enthält und einen in den Dehnstoff eintauchenden Stößel (18) aufweist, der an einem Abstützteil (19) des Ventilgehäuses (11) axial abgestützt ist.

12. Thermostatventil nach einem der Ansprüche 1 bis 11,
**dadurch gekennzeichnet,**
**dass** das thermostatische Arbeitselement (12) das Ventilglied (13) trägt und bei der Verschiebung seines Gehäuses (17) in die Öffnungsstellung und zugleich in die Schrägstellung das Ventilglied (13) mitnimmt und vom Ventilsitz (16) abhebt.

13. Thermostatventil nach Anspruch 11 oder 12,
**dadurch gekennzeichnet,**
**dass** das Ventilglied (13) an einer Schulter (21) des Gehäuses (17) des thermostatischen Arbeitselements (12) anliegt und vom Gehäuse (17) bei dessen Relativbewegung relativ zum abgestützten Stößel (18) in Öffnungsrichtung mitgenommen wird.

14. Thermostatventil nach einem der Ansprüche 11 bis 13,
**dadurch gekennzeichnet,**
**dass** der Stößel (18) mit seinem freien Ende zumindest in Grenzen schwenkbeweglich am Abstützteil (19) des Ventilgehäuses (11) abgestützt ist.

15. Thermostatventil nach Anspruch 14,
**dadurch gekennzeichnet,**
**dass** das Abstützteil (19) zur Abstützung eine sich zum thermostatischen Arbeitselement (12) hin etwa umgekehrt kegelstumpfförmig erweiternde Aufnahme (31) für den Stößel (18) enthält.

16. Thermostatventil nach einem der Ansprüche 1 bis 15,
**dadurch gekennzeichnet,**
**dass** das Ventilglied (13) als Ventilteller ausgebildet ist.

17. Thermostatventil nach einem der Ansprüche 1 bis 16,
**dadurch gekennzeichnet,**
**dass** das Ventilglied (13), insbesondere der Ventilteller, mit der das Ventilglied (13) enthaltenden Ebene in Schrägstellung in Bezug auf die den Ventilsitz (16) enthaltende radiale Ebene (15) unter einem Schrägungswinkel von bis zu etwa 45° oder größer verläuft.

## Claims

1. Thermostatic valve, with a thermostatic working element (12) and with a valve member (13) to which a valve seat (16) is assigned in a valve housing (11) and which can be actuated by the thermostatic working element (12), **characterized by** an actuating device for inclining and resetting the working element (12), by means of which actuating device the thermostatic working element (12), together with the valve member (13), can at the same time, during opening actuation, be set obliquely into an inclined position with respect to the longitudinal orientation, for example the longitudinal mid-axis (14), of the valve housing (11), thereby enlarging the throughflow cross section on one side of the working element (12) and of the valve member (13), and can at the same time, during closing actuation, be adjusted out of the inclined position back into a coaxial initial position with respect to the longitudinal orientation, for example the longitudinal mid-axis (14), of the valve housing (11).

2. Thermostatic valve according to Claim 1, **characterized in that** the actuating device has a setting device acting upon the working element (12).

3. Thermostatic valve according to Claim 2, **characterized in that** the setting device has at least one setting lever or such like setting member.

4. Thermostatic valve according to Claims 1 to 3, **characterized in that** the actuating device has a drive device.

5. Thermostatic valve according to Claim 1, **characterized in that** the actuating device has a guide element (40) for the oblique guidance of the thermostatic working element (12) during movement into the inclined position and back into the initial position.

6. Thermostatic valve according to Claim 5, **characterized in that** the guide element (40) has an oblique face (41) which is directed obliquely with respect to the longitudinal orientation, for example the longitudinal mid-axis (14), of the valve housing (11) and along which, during opening actuation, the thermostatic working element (12) is guided with a region (23), for example a housing end region, in the opening direction, at the same time assuming an inclined position, in particular slides directly, for example by means of rocking bodies, rolling bodies, sliding bodies or the like.

7. Thermostatic valve according to Claim 5 or 6, **characterized in that** the guide element (40) is formed from a tab (42) which runs obliquely with respect to the longitudinal orientation, for example the longitudinal mid-axis (14), of the valve housing (11) and which is assigned to that housing end region (23) of the thermostatic working element (12) which faces away from the valve member (13).

8. Thermostatic valve according to one of Claims 5 to 7, **characterized in that** the guide element (40) is part, for example one-piece integral part, of a bridge member (24) which is held at both ends on the valve housing (11), for example on projecting arms (25, 26) of the latter, and which contains a central passageway (27) for the passage of the housing (17) of the thermostatic working element (12) and serves as a support for a resetting means (28), for example a resetting spring, engaging on the working element (12) and/or on the valve member (13).

9. Thermostatic valve according to Claim 8, **characterized in that** the guide element (40), starting from the bridge member (24), is directed, with respect to a side which faces away from the valve member (13), obliquely downwards and towards the longitudinal mid-axis (14) of the valve housing (11).

10. Thermostatic valve according to Claim 8 or 9, **characterized in that** the central passageway (27) of the bridge member (24) is dimensioned larger than the transverse dimension, for example the diameter, of the working element (12), in such a way that the working element (12) is movable into an inclined position in the passageway (27).

11. Thermostatic valve according to one of Claims 1 to 10, **characterized in that** the thermostatic working element (12) contains, within its housing (17), an expandable substance, for example wax, swelling in the event of a temperature rise and has a tappet (18) which penetrates into the expandable substance and which is supported axially on a support part (19) of the valve housing (11).

12. Thermostatic valve according to one of Claims 1 to 11, **characterized in that** the thermostatic working element (12) carries the valve member (13) and, during the displacement of its housing (17) into the opening position and at the same time into the inclined position, takes along the valve member (13) and lifts it off from the valve seat (16).

13. Thermostatic valve according to Claim 11 or 12, **characterized in that** the valve member (13) bears against a shoulder (21) of the housing (17) of the thermostatic working element (12) and is taken along in the opening direction by the housing (17) during its relative movement in relation to the supported tappet (18).

14. Thermostatic valve according to one of Claims 11 to 13, **characterized in that** the tappet (18) is supported with its free end pivotably movable, at least within limits, on the support part (19) of the valve housing (11).

15. Thermostatic valve according to Claim 14, **characterized in that** the support part (19) contains, for supporting purposes, a receptacle (31) for the tappet (18), which receptacle widens in an approximately inversely frustoconical manner towards the thermostatic working element (12).

16. Thermostatic valve according to one of Claims 1 to 15, **characterized in that** the valve member (13) is designed as a valve disc.

17. Thermostatic valve according to one of Claims 1 to 16, **characterized in that** the valve member (13), in particular the valve disc, in the inclined position runs at an angle of obliquity of up to about 45° or higher to the plane containing the valve member (13), with respect to the radial plane (15) containing the valve seat (16).

## Revendications

1. Soupape thermostatique, comprenant un élément de travail thermostatique (12) et un organe de soupape (13), auquel est associé un siège de soupape (16) dans un boîtier de soupape (11), et qui peut être actionné par l'élément de travail thermostatique (12),
**caractérisée par**
un dispositif d'actionnement pour positionner obliquement et ramener l'élément de travail (12), par le biais duquel l'élément de travail thermostatique (12) conjointement avec l'organe de soupape (13) peuvent être simultanément ajustés obliquement dans une position oblique lors de l'actionnement d'ouverture par rapport à l'orientation longitudinale, par exemple l'axe médian longitudinal (14) du boîtier de soupape (11), avec augmentation de la section transversale d'écoulement d'un côté de l'élément de travail (12) et de l'organe de soupape (13) et peuvent être ramenés simultanément de la position oblique dans une position de départ coaxiale lors de l'actionnement de fermeture par rapport à l'orientation longitudinale, par exemple l'axe médian longitudinal (14), du boîtier de soupape (11).

2. Soupape thermostatique selon la revendication 1,
**caractérisée en ce que**
le dispositif d'actionnement présente un dispositif de réglage agissant sur l'élément de travail (12).

3. Soupape thermostatique selon la revendication 2,
**caractérisée en ce que**
le dispositif de réglage présente au moins un levier de réglage ou un organe de réglage similaire.

4. Soupape thermostatique selon l'une quelconque des revendications 1 à 3,
**caractérisée en ce que**
le dispositif d'actionnement présente un dispositif d'entraînement.

5. Soupape thermostatique selon la revendication 1,
**caractérisée en ce que**
le dispositif d'actionnement présente un élément directeur (40) pour le guidage oblique de l'élément de travail thermostatique (12) lors du déplacement dans la position oblique et de retour dans la position de départ.

6. Soupape thermostatique selon la revendication 5,
**caractérisée en ce que**
l'élément directeur (40) présente une surface oblique (41) orientée obliquement par rapport à l'orientation longitudinale, par exemple l'axe médian longitudinal (14) du boîtier de soupape (11), le long de laquelle l'élément de travail thermostatique (12) est guidé lors de l'actionnement d'ouverture avec une région (23), par exemple une région d'extrémité du boîtier, dans la direction d'ouverture avec positionnement oblique simultané, par exemple au moyen de corps de roulement, de corps à rouleaux, de corps de glissement ou similaires, en particulier directement par glissement le long de celle-ci.

7. Soupape thermostatique selon la revendication 5 ou 6,
**caractérisée en ce que**
l'élément directeur (40) est formé par une patte (42) qui s'étend obliquement par rapport à l'orientation longitudinale, par exemple l'axe médian longitudinal (14) du boîtier de soupape (11), et qui est associée à la région d'extrémité du boîtier (23) de l'élément de travail thermostatique (12) qui est tournée vers l'organe de soupape (13).

8. Soupape thermostatique selon l'une quelconque des revendications 5 à 7,
**caractérisée en ce que**
l'élément directeur (40) fait partie, par exemple est un constituant d'une seule pièce, d'un organe formant pont (24) maintenu aux deux extrémités sur le boîtier de soupape (11), par exemple à des bras (25, 26) de celui-ci s'étendant vers le bas, cet organe formant pont (24) contenant un passage central (27) pour le passage du boîtier (17) de l'élément de travail thermostatique (12), et servant à supporter un moyen de rappel (28) venant en prise sur l'élément de travail (12) et/ou sur l'organe de soupape (13), par exemple un ressort de rappel.

9. Soupape thermostatique selon la revendication 8,
**caractérisée en ce que**
l'élément directeur (40) est orienté obliquement vers le bas et vers l'axe médian longitudinal (14) du boîtier de soupape (11) à partir de l'organe formant pont (24) vers un côté qui est opposé à l'organe de soupape (13).

10. Soupape thermostatique selon la revendication 8 ou 9,
**caractérisée en ce que**
le passage central (27) de l'organe formant pont (24) est plus grand que la dimension transversale, par exemple le diamètre, de l'élément de travail (12), de telle sorte que l'élément de travail (12) puisse être déplacé dans le passage (27) dans la position oblique.

11. Soupape thermostatique selon l'une quelconque des revendications 1 à 10,
**caractérisée en ce que**
l'élément de travail thermostatique (12) comprend à l'intérieur de son boîtier (17) un matériau extensible se dilatant sous l'effet d'une augmentation de la température, par exemple de la cire, et présente un poussoir (18) plongeant dans le matériau extensible, qui est supporté axialement sur une partie de support (19) du boîtier de soupape (11).

12. Soupape thermostatique selon l'une quelconque des revendications 1 à 11,
**caractérisée en ce que**
l'élément de travail thermostatique (12) porte l'organe de soupape (13) et lors du déplacement de son boîtier (17) dans la position d'ouverture et en même temps dans la position oblique, entraîne l'organe de soupape (13) et le soulève du siège de soupape (16).

13. Soupape thermostatique selon la revendication 11 ou 12,
**caractérisée en ce que**
l'organe de soupape (13) s'applique contre un épaulement (21) du boîtier (17) de l'élément de travail thermostatique (12) et est entraîné dans la direction d'ouverture par le boîtier (17) lors de son mouvement relatif par rapport au poussoir supporté (18).

14. Soupape thermostatique selon l'une quelconque des revendications 11 à 13,
**caractérisée en ce que**
le poussoir (18) est supporté avec son extrémité libre au moins dans certaines limites, de manière pivotante sur la partie de support (19) du boîtier de soupape (11).

15. Soupape thermostatique selon la revendication 14,
**caractérisée en ce que**
la partie de support (19) comprend, pour le support, un logement (31) pour le poussoir (18) s'élargissant vers l'élément de travail thermostatique (12) approximativement inversement en forme de tronc de cône.

16. Soupape thermostatique selon l'une quelconque des revendications 1 à 15,
**caractérisée en ce que**
l'organe de soupape (13) est réalisé sous forme de tête de soupape.

17. Soupape thermostatique selon l'une quelconque des revendications 1 à 16,
**caractérisée en ce que**
l'organe de soupape (13), en particulier la tête de soupape, s'étend suivant un angle d'oblicité allant jusqu'à environ 45° ou plus, avec le plan contenant l'organe de soupape (13) dans la position oblique par rapport au plan radial (15) contenant le siège de soupape (16).
